# EUROPEAN PATENT SPECIFICATION

(11) **EP 0 634 898 B1**
(45) Date of publication and mention of the grant of the patent: **11.10.1995**
(21) Application number: 92910809.0
(22) Date of filing: 08.04.1992
(51) Int. Cl.: A21D 15/02, B65B 25/16, B65B 31/02, A23L 3/375

(54) **METHOD FOR PACKING BAKERY PRODUCTS**
VERFAHREN ZUM VERPACKEN VON BACKWAREN
PROCEDE DE CONDITIONNEMENT DE PRODUITS DE BOULANGERIE

(43) Date of publication of application: 25.01.1995
(73) Proprietor: AGA AKTIEBOLAG, 181 81 Lidingö (SE)
(72) Inventor: WIJLENS, Jos, NL-1003 AA Amsterdam (NL)
(74) Representative: Berglund, Stefan
(86) International application number: SE9200225
(87) International publication number: WO9320700

(56) References cited:
- EP-A- 0 313 168
- EP-A- 0 478 316
- GB-A- 1 231 788
- US-A- 2 649 379
- US-A- 3 104 977
- US-A- 4 366 178

## Description

The invention relates to a method for packing bakery products such as sponge-cakes and similar products in a gas tight wrapper of foil material or the like, whereby the baked product first is cooled down before it is arranged within the wrapper.

Such a method is generally known.

When the bakery product leaves the furnace it generally has a temperature of slightly more than 100 °C. The cells of the product are then essentially filled with carbon dioxide and water vapor. The carbon dioxide has been developed during the rising of the product.

At the moment the hot cake is leaving the furnace the cake is essentially free of oxygen and of microorganisms, what would be an ideal situation for packaging.

During the cooling down in the atmospheric air, however several effects occur, e.g.:

The carbon dioxide and water vapor disappear partly from the product as a result of the differences between the concentration of water and carbon dioxide in the cake and the surrounding atmosphere. The atmosphere of the pores of the cake cells will due to diffusion after cooling down be replaced by an atmosphere corresponding to the composition of the surrounding air.

Due to cooling down in atmosphere the pores of the cake will contain about 20 percent of oxygen and the cake itself will in most cases be contaminated with traces of bacteria or fungi.

From the Dutch Patent Specification 176,131 it is known to cool down bakery product not in air but in vacuum. The above-mentioned effects will occur then partly.

From for instance the European Patent Application A1-0,313,168 it is known to cool down bakery products in an environment of carbon dioxide gas with the purpose to saturate the product with this gas. In practicizing this method the carbon dioxide, as is expressly stated, is not used as a coolant. Thus, carbon dioxide must be absorbed during the total cooling down of the product.

The present invention has as one of its aims to speed up the time interval from taking out the cake from the furnace till the cake is placed in a package wrapper.

Another purpose of the invention is to prolong the shelf live of the product.

These objects are achieved in accordance with the invention with a method for packing bakery products such as sponge-cakes and similar products in a gas tight wrapper of foil material or the like, whereby the baked product first is cooled down before it is arranged within the wrapper. The method is characterized in that the cake immediately after leaving the oven is cooled down in an enclosure having an atmosphere of carbon dioxide or nitrogen at a temperature below 273 K. Preferred embodiments are defined in the claims dependent on the independent claim.

The invention is disclosed more in detail as an example.

A sponge cake is baked in an oven having a temperature of about 180°C for about 60 minutes. The cake, when baked has a shape of an elongate body having a length of about 20 cm and a width of about 10 cm. The height is about 6 cm.

When leaving the oven it is assumed that the cake is sterile. The cake core will have a temperature of about 92°C. After that the cake has been taken out of the oven it is immediately transported into a cryogenic or gas freezer tunnel having a temperature of about 218 K. The atmosphere inside said freezer and thus surrounding the cake is carbon dioxide or nitrogen or a mixture of these gases. Pure carbon dioxide or carbon dioxide in mixture with nitrogen are preferred.

The residence time of the cake in the freezer tunnel is 3-4 minutes. During this time the outer part of the cake will be cooled down leaving the core still hot, about 86°C. The outer part forms a stable crust having a thickness of about 5-7 mm. The crust makes the cake stable enough to be handled in the following packing procedure.

From the tunnel freezer the cake is transported directly to a packing station in a tunnel having the same atmosphere as the freezer inside. At the packing station the cake having a hot core and a cold crust is packed in a vacuum pack or, preferably in a controlled atmosphere, e.g. 70 percent carbon dioxide and 30 percent nitrogen.

After packaging the cake will cool down. At first water will evaporate and deposit on the inside wall of the wrapper foil. When the core has been cooled down to approximately environmental temperature the liquid water from the inside wall has again evaporated and been absorbed by the cake.

The advantage of the present method is that on cooling the cake in the freezer tunnel the surrounding atmosphere will be absorbed instead of air. This gives a longer shelf live for the cake. Further, the fast cooling to create a stable crust makes it possible to pack a cake still being hot.

## Claims

1. A method for packing bakery products such as sponge-cakes and similar products in a gas tight wrapper of foil material or the like, whereby the baked product first is cooled down before it is arranged within the wrapper, **characterized** in that the cake immediately after leaving the oven is cooled down in an enclosure having an atmosphere of carbon dioxide or nitrogen at a temperature below 273 K.

2. The method according to claim 1 **characterized** in that the cake is cooled down at a temperature below 215 K.

3. The method according to claim 1 or 2, **characterized** in that the atmosphere in the enclosure is maintained by liquid carbon dioxide or liquid nitrogen being injected into the enclosure.

4. The method according to one or more of claims 1-3, **characterized** in that the cake is cooled down until a stable crust is formed.

5. The method according to one or more of claims 1-3, **characterized** in that the cake is cooled down until a stable crust of about 5-10 mm is formed.

6. The method according to claim 4 or 5, **characterized** in that the cake having a stable crust and a hot core is sealingly enclosed in the wrapper containing an atmosphere consisting of nitrogen and/or carbon dioxide.

7. The method according to claim 4 or 5, **characterized** in that the cake having a stable crust and a hot core is vacuum packed in the wrapper.

## Patentansprüche

1. Verfahren zum Verpacken von Backwaren wie Biskuit-Gebäck und ähnliche Produkte in einer gasdichten Hülle aus Folienmaterial oder dergleichen, bei dem die Backware zunächst abgekühlt wird, bevor sie in die Hülle gegeben wird, dadurch gekennzeichnet, daß das Gebäck sofort nach dem Verlassen des Ofens in einer Einschließung abgekühlt wird, die eine Atmosphäre von Kohlendioxyd oder Stickstoff bei einer Temperatur unterhalb 273 K enthält.

2. Verfahren nach Anspruch 1, dadurch gekennzeichnet, daß das Gebäck bei einer Temperatur von unterhalb 215 K gekühlt wird.

3. Verfahren nach Anspruch 1 oder 2, dadurch gekennzeichnet, daß die Atmosphäre in der Einschließung dadurch aufrechterhalten wird, daß flüssiges Kohlendioxyd oder flüssiger Stickstoff in die Einschließung eingespritzt wird.

4. Verfahren nach einem oder mehreren der Ansprüche 1 bis 3, dadurch gekennzeichnet, daß das Gebäck abgekühlt wird, bis eine stabile Kruste gebildet ist.

5. Verfahren nach einem der mehreren der Ansprüche 1 bis 3, dadurch gekennzeichnet, daß das Gebäck gekühlt wird, bis eine stabile Kruste von etwa 5 bis 10 mm gebildet ist.

6. Verfahren nach Anspruch 4 oder 5, dadurch gekennzeichnet, daß das eine stabile Kruste und einen heißen Kern aufweisende Gebäck dicht in eine Hülle eingeschlossen wird, die eine aus Stickstoff und/oder Kohlendioxyd bestehende Atmosphäre enthält.

7. Verfahren nach Anspruch 4 oder 5, dadurch gekennzeichnet, daß das eine stabile Kruste und einen heißen Kern aufweisende Gebäck in der Hülle vakuumverpackt wird.

## Revendications

1. Procédé de conditionnement de produits de boulangerie tels que des gâteaux de Savoie et produits similaires dans une enveloppe étanche aux gaz en un matériau en feuille ou analogue, dans lequel le produit cuit au four est tout d'abord refroidi avant d'être disposé dans l'enveloppe, caractérisé en ce que, immédiatement après avoir quitté le four, le gâteau est refroidi dans une enceinte ayant une atmosphère de dioxyde de carbone ou d'azote à une température inférieure à 273 K.

2. Procédé selon la revendication 1, caractérisé en ce que le gâteau est refroidi à une température inférieure à 215 K.

3. Procédé selon la revendication 1 ou 2, caractérisé en ce que l'atmosphère dans l'enceinte est maintenue par du dioxyde de carbone liquide ou de l'azote liquide injecté dans l'enceinte.

4. Procédé selon l'une ou plusieurs des revendications 1 à 3, caractérisé en ce que le gâteau est refroidi jusqu'à ce qu'une croûte stable soit formée.

5. Procédé selon l'une ou plusieurs des revendications 1 à 3, caractérisé en ce que le gâteau est refroidi jusqu'à ce qu'une croûte stable d'environ 5-10 mm soit formée.

6. Procédé selon la revendication 4 ou 5, caractérisé en ce que le gâteau ayant une croûte stable et un coeur chaud est enfermé de manière étanche dans l'enveloppe contenant une atmosphère d'azote et/ou de dioxyde de carbone.

7. Procédé selon la revendication 4 ou 5, caractérisé en ce que le gâteau ayant une croûte stable et un coeur chaud est conditionné sous vide dans l'enveloppe.
